# EUROPEAN PATENT SPECIFICATION

(11) **EP 3 209 121 B1**
(45) Date of publication and mention of the grant of the patent: **17.04.2019**
(21) Application number: 15781937.6
(22) Date of filing: 20.10.2015
(51) Int. Cl.: A01K 31/04, A01K 31/16, A01K 31/17, A01K 31/00, A01K 31/18, A01K 31/22

(54) **AVIARY APPARATUS FOR REARING LAYING HENS**
VOLIERENVORRICHTUNG ZUR AUFZUCHT VON LEGEHENNEN
APPAREIL AVIAIRE POUR L'ÉLEVAGE DE POULES PONDEUSES

(30) Priority: 21.10.2014 IT PD20140272
(43) Date of publication of application: 30.08.2017
(73) Proprietor: Officine Facco & C. S.p.A., 35010 Campo San Martino (IT)
(72) Inventor: FINCO, Massimo, 35122 Padova (IT)
(74) Representative: Modiano, Micaela Nadia
(86) International application number: PCT/EP2015/074231
(87) International publication number: WO 2016/062701

(56) References cited:
- EP-A1- 1 477 057
- EP-A2- 2 878 195
- DE-U1-202005 010 086
- US-A1- 2015 264 894

## Description

The present invention relates to an aviary apparatus for rearing laying hens.

In poultry farms offering an alternative to traditional cages, the poultry must have a bedstead surface of which at least one third is on the ground, from which derives the need to leave the poultry free to move outside traditional cages for rearing laying hens.

In particular the so-called 'aviary' system involves enclosed rearing on a plurality of stories of open cages, which makes it possible to increase the density of the poultry with respect to straightforward free-range rearing.

An apparatus for providing such a system can have at most four superimposed levels at a distance specified by regulations, positioned so as to prevent the feces from the upper levels from falling onto the lower levels. In these systems the hens develop stronger bones by moving between the different levels.

However the hens must be encouraged to move in a three-dimensional space and this occurs if the mangers and drinking troughs are arranged on the different levels.

The most frequent problems of such system are the end-of-cycle load and the laying of eggs outside the nest.

In fact a rearing system entails, in current apparatuses, a certain number of eggs laid on the ground which must be collected by personnel in order to not be lost from the daily production.

Such a system therefore generates labor costs and costs in terms of reduced numbers of eggs collected, while traditional cage systems are provided with automatic means for collecting the laid eggs.

EP 1 477 057 discloses an aviary apparatus as defined in the preamble of claim 1.

EP 2 878 195 discloses an aviary apparatus comprising multistory rearing batteries which comprise lower stop surfaces of the type with inclined stop grids wherein the lower stop surfaces are provided with lateral egg collection conveyor belts and with inclined scratching floors descending toward a contiguous conveyor belt.

The aim of the present invention is to provide an apparatus for rearing laying hens which is capable of overcoming the above mentioned drawbacks of conventional apparatuses for laying hens for alternative types of rearing systems.

Within this aim, an object of the invention is to provide an apparatus that does not require many operators for collecting eggs laid on the ground.

Another object of the invention is to provide an apparatus that enables an alternative system for rearing that fully complies with national and international regulations and without incurring extra costs for personnel.

Another object of the invention is to provide an apparatus that enables a better collection of eggs from the ground than conventional apparatuses for alternative systems of rearing.

This aim and these and other objects which will become better apparent hereinafter are achieved by an aviary apparatus for rearing laying hens, which comprises mutually laterally adjacent multistory rearing batteries, each one of said batteries comprising at least one lower stop surface and one upper stop surface, with areas on which the poultry can walk between the batteries and laterally to the outermost batteries, characterized in that said lower stop surfaces and upper stop surfaces comprise corresponding conveyor belts for eggs and feces, said walkable areas comprising inclined floors descending toward a contiguous conveyor belt of a lower stop surface of a corresponding battery; said lower stop surfaces and intermediate stop surfaces of each battery being of the type with inclined stop grids and provided with lateral egg collection conveyor belts ; said inclined floors having, at longitudinal unloading edges thereof, descent extension elements adapted to make the eggs descend from the inclined floors onto the inclined stop grids, wherein the entire surface occupied by the apparatus being affected by inclined floors and conveyor belts is adapted to render the collection of the eggs on all of said surface autonomous and automated, and conveyor belts similar to the conveyor belts of the lower and upper stop surfaces of the batteries being arranged below the grids and having the purpose of collecting feces.

Further characteristics and advantages of the invention will become better apparent from the description of a preferred, but not exclusive, embodiment of the apparatus according to the invention, which is illustrated by way of non-limiting example in the accompanying drawings wherein:

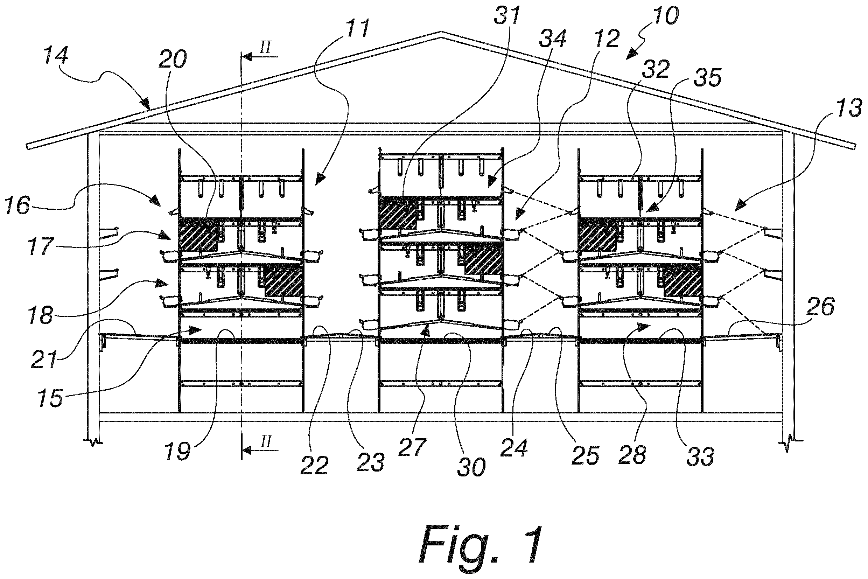

- Figure 1 is a schematic front elevation view of an apparatus according to the invention;
- Figure 2 is a partially sectional side view of the apparatus in Figure 1;

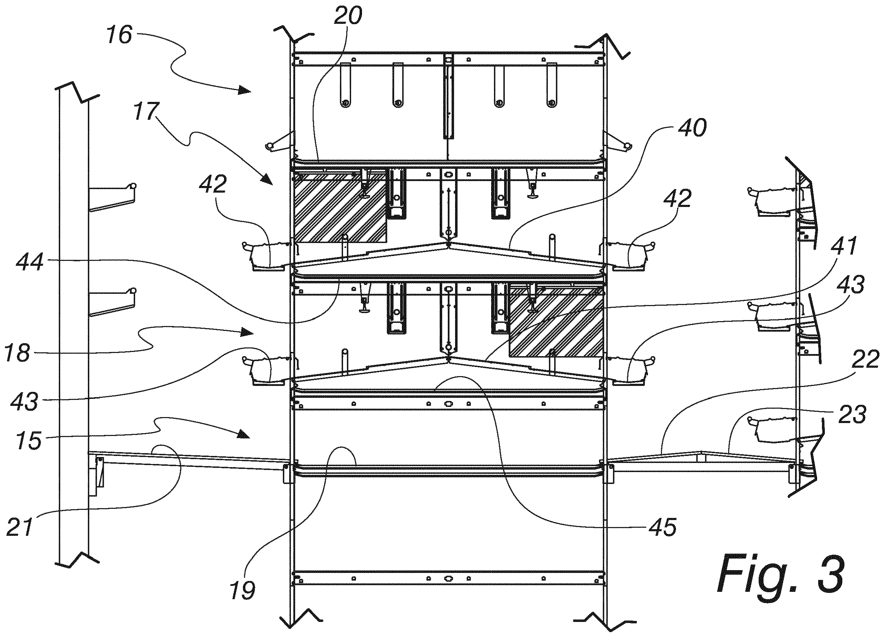

- Figure 3 is a detail of Figure 1,
- Figure 4 is a detail of an apparatus according to the invention in a variation of embodiment thereof,
- Figure 5 is a detail of an apparatus according to the invention in a further variation of embodiment thereof.

With reference to the figures, an aviary apparatus for rearing laying hens according to the invention is generally designated with the reference numeral 10.

The aviary apparatus 10 comprises a plurality of multistory rearing batteries, for example three batteries 11, 12 and 13 which are mutually laterally adjacent inside a shed 14.

Each battery should be understood to comprise a plurality of levels of rows of cages, which are laterally adjacent in the direction of the length of the battery and are open outwardly, i.e. toward the corridors between batteries.

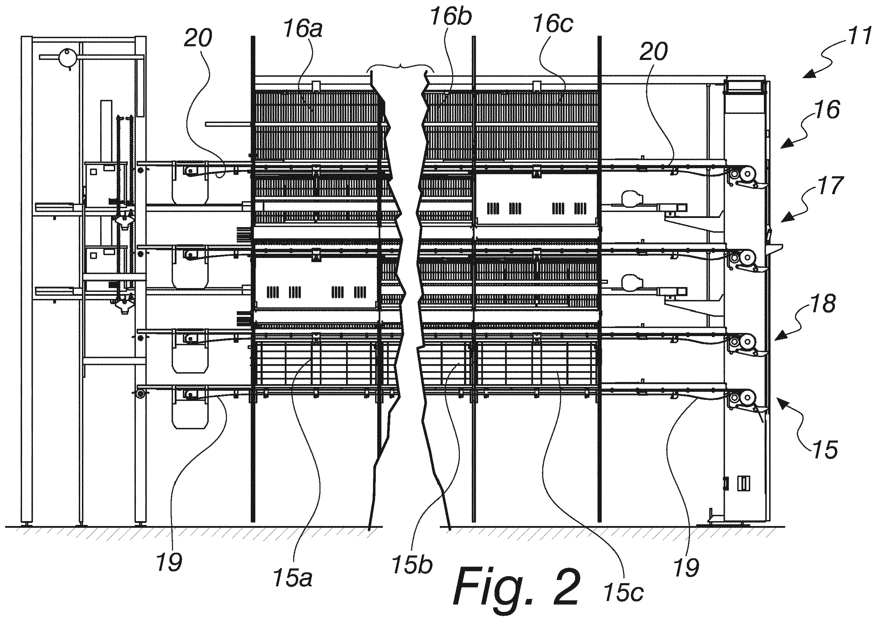

Figure 2 is a sectional side view of the first battery 11, and indicates by way of example the cages 15a, 15b and 15c for the lower stop surface 15, and the cages 16a, 16b and 16c for the upper stop surface.

Each one of the batteries 11, 12 and 13 comprises, in the present embodiment, four superimposed stop surfaces for the hens.

For example, a first battery 11 comprises a lower stop surface 15, an upper stop surface 16 and two intermediate surfaces 17 and 18.

There are areas on which the poultry can walk between the batteries 11, 12 and 13 and laterally to the outermost batteries 11 and 13.

The peculiarity of the invention consists in that the lower stop surfaces 15 and the upper stop surfaces 16 comprise corresponding conveyor belts 19 and 20 respectively, which are adapted to convey eggs and feces.

The walkable areas comprise inclined floors 21, 22, 23, 24, 25 and 26 descending toward a contiguous conveyor belt 19, 30 or 33 of a lower stop surface, for example the lower stop surface 15 of the first battery 11, but also the lower stop surfaces 27 and 28 of the batteries 12 and 13 respectively.

Such inclined floors are positioned raised off the ground.

The entire surface of the shed occupied by the apparatus 10 is therefore affected by inclined floors 21, 22, 23, 24, 25 and 26 and conveyor belts 19, 30 and 33, so as to render the collection of the eggs autonomous and automated throughout the shed.

The lateral inclined floor 21, which extends between the first battery 11 and a wall of the shed 14, and the inclined floor 22 arranged between the two laterally adjacent batteries 11 and 12, cause the eggs laid on them to roll toward the conveyor belt 19 of the lower stop surface of the first battery 11; similarly the inclined planes 23 and 24, which are lateral to the second battery 12, cause the eggs laid on them to roll toward the conveyor belt 30 of the corresponding lower stop surface 27, of the type with a grid floor, of the second battery 12, and similarly for the inclined floors 25 and 26 and the conveyor belt 33 of the lower stop surface 28 of the third battery 13.

Thanks to the inclined floors 21, 22, 23, 24, 25 and 26 and to the conveyor belts of the lower stop surfaces, all of the eggs laid on the surfaces walkable by the hens, both on the inclined floors and directly on the conveyor belts 19, 24 and 33, can be collected automatically thanks to the movement of the conveyor belts, which bring the eggs, together with the feces, toward an area at the end of the belt where mechanically or manually the eggs are rapidly collected without one or more operators having to scour the shed in order to quickly collect all the eggs laid.

Since the upper stop surfaces 16 for the first battery 11, 34 for the second battery 12, and 35 for the third battery 13, also have corresponding conveyor belts 20, 31 and 32, the entire uncovered surface, i.e. not below another stop surface, is equipped to automatically collect all the eggs laid.

The conveyor belts 19, 20, 30, 31, 32 and 33 are extended substantially along the entire width of the batteries 11, 12, 13 and along the entire length of those batteries.

In the present embodiment, the intermediate stop surfaces of each battery, for example the intermediate stop surfaces 17 and 18 for the first battery 11, are of the type with inclined stop grids 40 and 41 and with lateral egg collection conveyor belts 42 and 43.

Arranged below the grids 40 and 41 are the conveyor belts 44 and 45 which are similar to the conveyor belts 19, 20, 30, 31, 32 and 33 of the upper and lower stop surfaces of the batteries, the function of which is to collect the feces but not the eggs, which are collected by the lateral conveyor belts 42 and 43.

The conveyor belt 30 of the lower stop surface of the second battery 12 is designed to gather feces, which originate from the grid surface that lies over it, and eggs, which descend from the adjacent inclined floors 23 and 24.

In a variation of embodiment of the invention, the intermediate stop surfaces can also be made with conveyor belts only, similarly to the lower stop surface and to the upper stop surface, without inclined grids or lateral conveyor belts for the eggs.

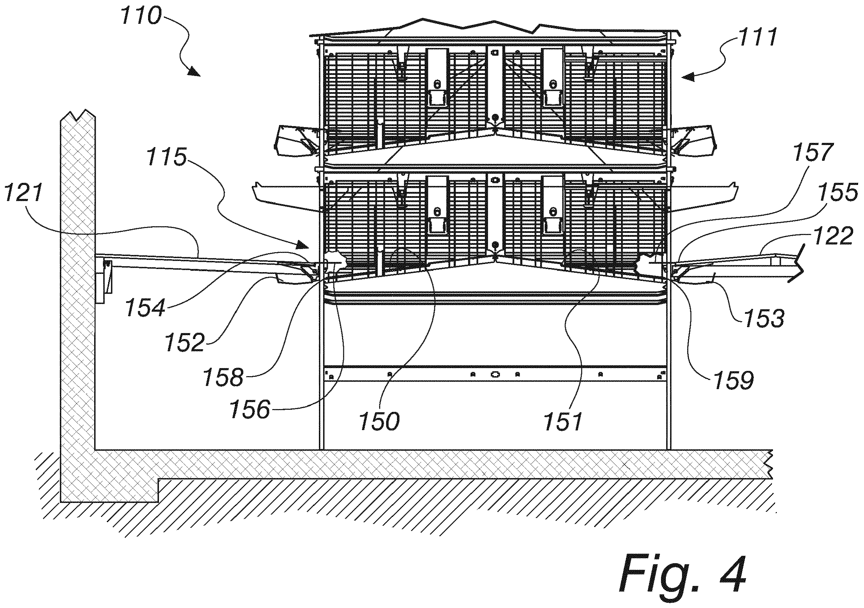

In a further variation of embodiment of the apparatus according to the invention, shown in Figure 4 and designated therein with the reference numeral 110, the lower stop surfaces of each battery, for example the stop surface 115 of the first battery 111, are of the type with inclined stop grids 150 and 151, and with lateral egg collection conveyor belts 152 and 153.

The apparatus 110 has the peculiarity that the inclined floors, for example 121 and 122, have, at the longitudinal unloading edges 154 and 155, descent extension elements, respectively 156 and 157, which are adapted to make the eggs descend from the inclined floors onto the inclined stop grids 150, 151.

The inclined floors 121 and 122 are therefore positioned at a height such that the longitudinal unloading edges 154 and 155 lie above the corresponding longitudinal unloading edges 158 and 159 of the inclined stop grids 150 and 151, from which the eggs descend directly onto the lateral egg collection conveyor belts 152 and 153.

The descent extension elements 156, 157 are each constituted, for example, by a plate that is fixed to the corresponding longitudinal unloading edge 154, 155, the plate being fixed so as to be substantially coplanar with respect to the inclined floor 121, 122 of which it is an extension.

The minimum distance between each descent extension element 156 and 157 and the corresponding underlying inclined stop grid 150 and 151 must be greater than the reference size of an egg, so as to allow the descent of the eggs from the stop grids 150 and 151 toward the respective lateral egg collection conveyor belts 152 and 153.

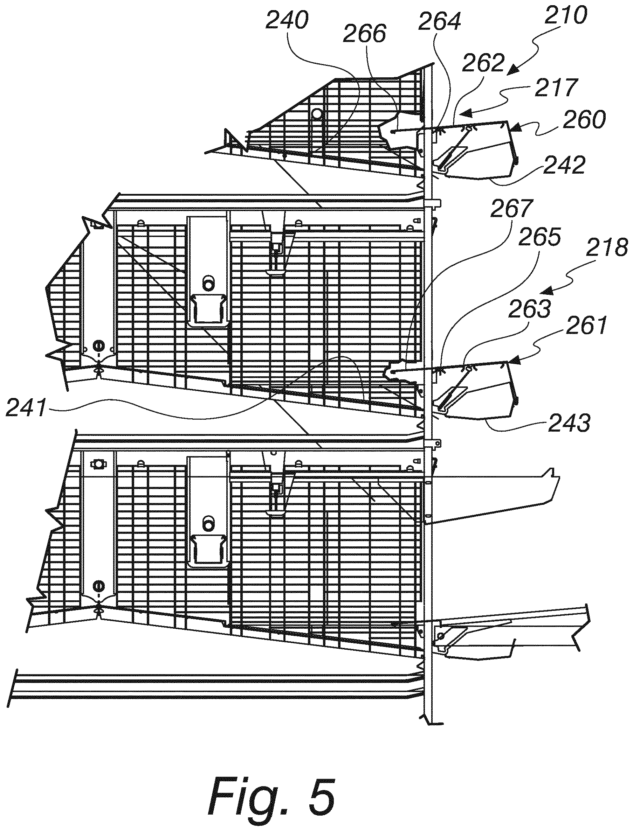

A further variation of embodiment of the apparatus according to the invention is designated with 210 in Figure 5.

The lateral egg collection conveyor belts 242 and 243 of the intermediate stop surfaces 217 and 218 have covering elements 260 and 261 to prevent the deposition of feces on the egg collection belts.

In such further variation of embodiment, the covering elements 260 and 261 for the lateral conveyor belts for collecting eggs 242 and 243 have an inclined covering plate 262 and 263 respectively, which is arranged with a slope that descends toward a laterally adjacent corresponding inclined grid 240 and 241.

In particular each one of the inclined covers 262 and 263 has, at the respective longitudinal unloading edges 264 and 265, a descent extension element, respectively 266 and 267, which is adapted to cause the descent of the eggs from the inclined covers 262 and 263 directly onto the inclined stop grids 240 and 241.

The descent extension elements 266 and 267 are understood to be similar to the above-described descent extension elements 156 and 157, and are similarly positioned with respect to the corresponding inclined stop grids.

In practice it has been found that the invention fully achieves the intended aim and objects.

In particular, with the invention an apparatus has been devised which does not require many operators for collecting eggs laid on the surfaces that are walkable by the hens, thanks to the inclined floors and to the conveyor belts of the lower stop surfaces of the batteries, on which the eggs laid on the inclined floors are collected.

Furthermore, with the invention an apparatus has been devised which enables an alternative system for rearing that fully complies with national and international regulations and without incurring extra costs for personnel, since the collection of eggs on the entire surface that is walkable by hens is automated.

Moreover, with the invention an apparatus has been devised which enables a better collection of eggs than conventional apparatuses for alternative systems of rearing.

In the present system, therefore, every point inside the farm can become a laying point for the animal and therefore without any loss of egg production.

As mentioned, alternative systems of rearing generate high labor costs and costs in terms of reduced numbers of eggs collected, and these situations are considerably reduced thanks to the apparatus according to the invention.

The invention, thus conceived, is susceptible of numerous modifications and variations, all of which are within the scope of the appended claims. Moreover, all the details may be substituted by other, technically equivalent elements.

In practice the components and the materials employed, provided they are compatible with the specific use, and the contingent dimensions and shapes, may be any according to requirements and to the state of the art.

The disclosures in Italian Patent Application No. PD2014A000272 (102014902302774) from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An aviary apparatus (10, 110) for rearing laying hens, which comprises mutually laterally adjacent multistory rearing batteries (11, 12, 13, 111), each one of said batteries (11, 12, 13,111) comprising at least one lower stop surface (15, 27, 28, 115) and one upper stop surface (16, 34, 35), with areas on which the poultry can walk between the batteries and laterally to the outermost batteries, **characterized in that** said lower stop surfaces (15, 115, 27, 28) and upper stop surfaces (16, 34, 35) comprise corresponding conveyor belts (19, 20, 30, 31, 32, 33) for eggs and feces, said walkable areas comprising inclined floors (21, 22, 23, 24, 25, 26, 121, 122) descending toward a contiguous conveyor belt (19, 30, 33) of a lower stop surface (15, 27, 28, 150) of a corresponding battery (1, 12, 13, 111); said lower stop surfaces (115) and intermediate stop surfaces (17, 18, 217, 218) of each battery (111) being of the type with inclined stop grids (150, 151, 40, 41, 242, 243) and provided with lateral egg collection conveyor belts (152, 153, 42, 43); said inclined floors (121, 122) having, at longitudinal unloading edges thereof (154, 155, 264, 265), descent extension elements (156, 157) adapted to make the eggs descend from the inclined floors onto the inclined stop grids (150, 151), wherein the entire surface occupied by the apparatus (10) being affected by inclined floors (21, 22, 23, 24, 25, 26) and conveyor belts (19, 30, 33) is adapted to render the collection of the eggs on all of said surface autonomous and automated, and conveyor belts (44, 45) similar to the conveyor belts (19, 20, 30, 31, 32, 33) of the lower and upper stop surfaces of the batteries being arranged below the grids (40, 41) and having the purpose of collecting feces.

2. The apparatus according to one or more of the preceding claims, **characterized in that** said conveyor belts (19, 20, 30, 31, 32, 33) are extended substantially along the entire width of the batteries (11, 12, 13, 111) and along the entire length of said batteries.

3. The apparatus according to claim 1, **characterized in that** said descent extension elements (156, 157) are each constituted by a plate that is fixed to the corresponding longitudinal unloading edge (154, 155), said plate being fixed so as to be substantially coplanar with respect to the inclined floor (121, 122) of which it is an extension.

4. The apparatus according to one or more of the preceding claims, **characterized in that** said lateral egg collection conveyor belts (242, 243) of the intermediate stop surfaces (217, 218) have covering elements (260, 261) to prevent the deposition of feces on the egg collection belts, said covering elements (260, 261) having an inclined covering plate (262, 263) which is arranged with a slope that descends toward a laterally adjacent corresponding inclined grid (240, 241).

5. The apparatus according to claim 4, **characterized in that** each one of said inclined covering plates (262, 263) has, at the longitudinal unloading edges (264, 265), a descent extension element (266, 267) which is adapted to cause the descent of the eggs from the inclined covers (262, 263) directly onto the inclined stop grids (240, 241).

## Patentansprüche

1. Eine Volierenvorrichtung (10, 110) zur Aufzucht von Legehennen, die mehrstöckige einander seitlich benachbarte Aufzuchtbatterien (11, 12, 13, 111) umfasst, wobei jede der Batterien (11, 12, 13, 111) mindestens eine untere Anschlagoberfläche (15, 27, 28, 115) und eine obere Anschlagoberfläche (16, 34, 35) umfasst, mit Bereichen, auf denen das Geflügel gehen kann, zwischen den Batterien und seitlich zu den äußersten Batterien; **dadurch gekennzeichnet, dass** die unteren Anschlagoberflächen (15, 115, 27, 28) und oberen Anschlagoberflächen (16, 34, 35) entsprechende Förderbänder (19, 20, 30, 31, 32, 33) für Eier und Kot umfassen; wobei die begehbaren Bereiche schräge Böden (21, 22, 23, 24, 25, 26, 121, 122) umfassen, die zu einem benachbarten Förderband (19, 30, 33) einer unteren Anschlagoberfläche (15, 27, 28, 150) einer entsprechenden Batterie (1, 12, 13, 111) hin absteigen;
wobei die unteren Anschlagoberflächen (115) und intermediären Anschlagoberflächen (17, 18, 217, 218) jeder Batterie (111) vom Typ mit schrägen Sperrgittern (150, 151, 40, 41, 242, 243) und mit seitlichen Eiersammel-Förderbändern (152, 153, 42, 43) ausgestattet sind;
wobei die schrägen Böden (121, 122) an Ablade-Längskanten (154, 155, 264, 265) derselben Abstiegs-Verlängerungselemente (156, 157) haben, die ausgebildet sind, um die Eier von den schrägen Böden auf die schrägen Sperrgitter (150, 151) rollen zu lassen; wobei
die gesamte von der Vorrichtung (10) eingenommene Oberfläche, die von schrägen Böden (21, 22, 23, 24, 25, 26) und Förderbändern (19, 30, 33) beeinflusst wird, ausgebildet ist, um das Sammeln der Eier auf der gesamten Oberfläche autonom und automatisch zu machen, und
wobei Förderbänder (44, 45) ähnlich den Förderbändern (19, 20, 30, 31, 32, 33) der unteren und oberen Anschlagoberflächen der Batterien unterhalb der Gitter (40, 41) angeordnet sind und den Zweck haben, Kot zu sammeln.

2. Die Vorrichtung gemäß einem oder mehreren der obigen Ansprüche, **dadurch gekennzeichnet, dass** die Förderbänder (19, 20, 30, 31, 32, 33) sich im Wesentlichen entlang der gesamten Breite und entlang der gesamten Länge der Batterien (11, 12, 13, 111) erstrecken.

3. Die Vorrichtung gemäß Anspruch 1, **dadurch gekennzeichnet, dass** die Abstiegs-Verlängerungselemente (156, 157) jeweils aus einer Platte bestehen, die an der entsprechenden Ablade-Längskante (154, 155) befestigt ist, wobei die Platte so befestigt ist, dass sie im Wesentlichen koplanar mit dem schrägen Boden (121, 122) ist, von dem sie eine Verlängerung ist.

4. Die Vorrichtung gemäß einem oder mehreren der obigen Ansprüche, **dadurch gekennzeichnet, dass** die seitlichen Eiersammel-Förderbänder (242, 243) der intermediären Anschlagoberflächen (217, 218) Abdeckelemente (260, 261) haben, um die Ablagerung von Kot auf den Eiersammelbändern zu verhindern; wobei die Abdeckelemente (260, 261) eine schräge Abdeckplatte (262, 263) haben, die mit einer Neigung versehen ist, welche zu einem entsprechenden seitlich benachbarten schrägen Gitter (240, 241) hin absteigt.

5. Die Vorrichtung gemäß Anspruch 4, **dadurch gekennzeichnet, dass** jede der schrägen Abdeckplatten (262, 263) an den Ablade-Längskanten (264, 265) ein Abstiegs-Verlängerungselement (266, 267) hat, welches ausgebildet ist, um das Herabrollen der Eier von den schrägen Abdeckungen (262, 263) direkt auf die schrägen Sperrgitter (240, 241) zu veranlassen.

## Revendications

1. Appareil aviaire (10, 110) pour élever des poules pondeuses, qui comporte des batteries d'élevage à étages mutuellement et latéralement adjacentes (11, 12, 13, 111), chacune desdites batteries (11, 12, 13, 111) comportant au moins une surface d'arrêt inférieure (15, 27, 28, 115) et une surface d'arrêt supérieure (16, 34, 35), avec des zones sur lesquelles la volaille peut marcher entre les batteries et latéralement jusqu'aux batteries les plus à l'extérieur, **caractérisé en ce que** lesdites surfaces d'arrêt inférieures (15, 27, 28, 115) et surfaces d'arrêt supérieures (16, 34, 35) comportent des bandes de convoyage (19, 20, 30, 31, 32, 33) correspondantes pour les oeufs et les déjections, lesdites zones sur lesquelles il est possible de marcher comportant des planchers inclinés (21, 22, 23, 24, 25, 26, 121, 122) descendant vers une bande de convoyage contigue (19, 30, 33) d'une surface d'arrêt inférieure (15, 27, 28, 150) d'une batterie (11, 12, 13, 111) correspondante,
lesdites surfaces d'arrêt inférieures (115) et des surfaces d'arrêt intermédiaires (17, 18, 217, 218) de chaque batterie (111) étant du type avec des grilles d'arrêt inclinées (150, 151, 40, 41, 242, 243) et pourvues de bandes de convoyage latérales pour la collecte des oeufs (152, 153, 42, 43),
lesdits planchers inclinés (121, 122) ayant, au niveau de bords de déchargement longitudinaux de ceux-ci (154, 155, 264, 265), des éléments d'extension de descente (156, 157) adaptés pour faire descendre les oeufs à partir des planchers inclinés sur les grilles d'arrêt inclinées (150, 151), dans lequel la surface complète occupée par l'appareil (10) étant affectée par les planchers inclinés (21, 22, 23, 24, 25, 26) et les bandes de convoyage (19, 30, 33) est adaptée pour rendre la collecte des oeufs sur la totalité de ladite surface autonome et automatisée, et des bandes de convoyage (44, 45) similaires aux bandes de convoyage (19, 20, 30, 31, 32, 33) des surfaces d'arrêt inférieures et supérieures des batteries étant agencées sous les grilles (40, 41) et ayant pour fonction de collecter les déjections.

2. Appareil selon une ou plusieurs des revendications précédentes, **caractérisé en ce que** lesdites bandes de convoyage (19, 20, 30, 31, 32, 33) s'étendent sensiblement sur toute la largeur des batteries (11, 12, 13, 111) et sur toute la longueur desdites batteries.

3. Appareil selon la revendication 1, **caractérisé en ce que** lesdits éléments d'extension de descente (156, 157) sont chacun constitués d'une plaque qui est fixée au bord de déchargement longitudinal (154, 155) correspondant, ladite plaque étant fixée de manière à être sensiblement coplanaire par rapport au plancher incliné (121, 122) dont elle est une extension.

4. Appareil selon une ou plusieurs des revendications précédentes, **caractérisé en ce que** lesdites bandes de convoyage latérales pour la collecte des oeufs (242, 243) des surfaces d'arrêt intermédiaires (217, 218) ont des éléments de recouvrement (260, 261) pour empêcher le dépôt de déjections sur les bandes de collecte d'oeufs, lesdits éléments de recouvrement (260, 261) ayant une plaque de recouvrement inclinée (262, 263) qui est agencée avec une pente qui descend vers une grille inclinée (240, 241) correspondante latéralement adjacente.

5. Appareil selon la revendication 4, **caractérisé en ce que** chacune desdites plaques de recouvrement inclinées (262, 263) a, au niveau des bords de déchargement longitudinaux (264, 265), un élément d'extension de descente (266, 267) qui est adapté pour entraîner la descente des oeufs à partir des plaques de recouvrement inclinées (262, 263) directement sur les grilles d'arrêt inclinées (240, 241).
